# EUROPÄISCHE PATENTSCHRIFT

(11) **EP 1 909 977 B1**
(45) Veröffentlichungstag und Bekanntmachung des Hinweises auf die Patenterteilung: **13.04.2016**
(21) Anmeldenummer: 06754085.6
(22) Anmeldetag: 02.06.2006
(51) Int. Cl.: B08B 9/00, B08B 7/00, B23Q 11/00

(54) **VERFAHREN UND WERKZEUG ZUR REINIGUNG VON KAVITÄTEN**
METHOD AND TOOL FOR CLEANING CAVITIES
PROCEDE ET OUTIL POUR NETTOYER DES CAVITES

(30) Priorität: 25.07.2005 DE 102005034634
(43) Veröffentlichungstag der Anmeldung: 16.04.2008
(73) Patentinhaber: Fraunhofer-Gesellschaft zur Förderung der angewandten Forschung e.V., 80686 München (DE)
(72) Erfinder: ZORN, Christof, 70825 Korntal-Münchingen (DE); GRIMME, Ralf, 74385 Pleidelsheim (DE)
(74) Vertreter: Pfenning, Meinig & Partner mbB
(86) Internationale Anmeldenummer: PCT/EP2006/005290
(87) Internationale Veröffentlichungsnummer: WO 2007/012364

(56) Entgegenhaltungen:
- EP-A- 1 503 401
- DE-A1- 4 423 188
- DE-A1- 10 311 552
- DE-A1- 10 318 238
- DE-C1- 10 218 519
- US-A- 5 482 211
- US-A1- 2003 175 626
- US-A1- 2004 112 406
- PATENT ABSTRACTS OF JAPAN Bd. 009, Nr. 092 (M-373), 20. April 1985 (1985-04-20) -& JP 59 218300 A (HATA TEKKOSHO:KK), 8. Dezember 1984 (1984-12-08)

## Beschreibung

Die vorliegende Erfindung betrifft ein Verfahren zur Reinigung von Kavitäten in Werkstücken und eine Reinigungsvorrichtung hierfür. Derartige Verfahren und Vorrichtungen werden insbesondere zur Reinigung von Kavitäten wie Bohrungen, Sacklöchern und dergleichen von partikulären und/oder filmartigen Verunreinigungen benötigt. Sie werden insbesondere im Bereich des Maschinenbaus der Automobilindustrie eingesetzt.

Die Reinigung von Kavitäten, wie Bohrungen oder Sacklöchern, stellt besondere Anforderungen an den Reinigungsprozess. Insbesondere bei hohen Aspektverhältnissen, d.h. bei einem geringen Durchmesser der Kavität bei großer Tiefe, besteht das Problem z.B. fertigurigsbedingte Verunreinigungen, wie Partikel (Späne und dergleichen) und Fette, vor der Weiterverarbeitung zu entfernen.

Hierzu stehen im Stand der Technik verschiedene Verfahren zur Verfügung.

Zum einen kann mittels Druckluftlanzen Druckluft in die Bohrung eingeblasen werden. Hierdurch werden dann Späne und Öle aus der Bohrung ausgetragen. Nachteilig ist hieran, dass sich dieses Reinigungsverfahren nicht zur Entfernung feiner Ölschichten oder von Partikeln mit einem Durchmesser < 1 µm mit gutem Erfolg verwenden lässt.

Alternativ kann mit einer Flüssigkeit unter hohem Druck die Bohrung gespült werden. Als Medien kommen dabei insbesondere Medien auf wässriger Basis oder auf Kohlenwasserstoff-Basis in Frage. Werden die Kavitäten hierdurch ausgespült, so ist anschließend eine Trocknung erforderlich. Weiterhin fallen Sekundärabfälle, wie Schlämme mit Waschmittelrückständen oder belastetes Abwasser, an, die entsorgt oder aufgearbeitet werden müssen. Auch sind bei diesem Verfahren besondere Maßnahmen zur Einhaltung der erlaubten maximalen Konzentrationen am Arbeitsplatz (MAK-Werte) erforderlich.

Die Reinigungswirkung kann noch erweitert werden, indem das Bauteil in ein Reinigungsbad getaucht und die Reinigungswirkung durch Einsatz von Ultraschall unterstützt wird. Allerdings lässt die Reinigungswirkung von Ultraschall in Bohrungen stark nach, da die Ultraschallenergie abhängig vom Bauteilmaterial nur bedingt das Bohrungsinnere erreicht. Bei einer derartigen Badlösung werden in der Bohrung gelöste Verschmutzungen auch nicht ausreichend abtransportiert. Wie auch beim Spülen mit Flüssigkeiten ist weiterhin anschließend eine Trocknung erforderlich.

Ein weiteres Verfahren aus dem Stand der Technik verwendet ebenfalls CO₂-Schnee. Mit Hilfe einer Zweistoffdüse wird flüssiges CO₂ entspannt und die entstehenden Eiskristalle über ein weiteres Gas, wie beispielsweise Stickstoff oder Luft, auf nahezu Schallgeschwindigkeit beschleunigt. Hierdurch treffen die entstandenen CO₂-Eiskristalle mit nahezu Schallgeschwindigkeit auf die zu reinigende Oberfläche der Kavität und entfernen vor allem aufgrund des Impulsübertrags die auf der Oberfläche befindlichen Partikel.

Nachteilig ist hieran, dass zur Beschleunigung der Eiskristalle eine Lavaldüse, d.h. ein aufwendig geformtes, komplexes Bauteil, benötigt wird. Dies vergrößert die Bauform und erhöht die Verbrauchskosten, sodass eine derartige CO₂-Sonde nicht zur Reinigung von Bohrungen und Sacklöchern mit kleinem Durchmesser, z.B. ≤ 20 mm, geeignet ist. Nachteilig ist auch weiterhin, dass die so abgestrahlten Partikel sich unter Umständen anschließend wieder an der Innenwandung (Kavität) ablagern. Auch die Entfernung von Fetten oder Ölen ist durch die Verwendung von CO₂-Schnee nicht gewährleistet.

Diesen Nachteil überwindet wiederum die Verwendung von überkritischem CO₂, das ein hervorragendes Lösungsmittel für Fette und Öle ist. Hierzu wird eine Druckkammer als CO₂-Bad eingesetzt. Diese Kammer wird unter hohem Druck (> 73 bar) mit überkritischem CO₂ geflutet. Dieses überkritische CO₂ dringt in die Bohrungen von Werkstücken, die in der Kammer abgelegt sind, ein und löst die Fette und Öle aus der Bohrung hervorragend heraus. Allerdings findet kein vollständiger Abtransport von Partikeln und Spänen in dem CO₂-Bad statt, da CO₂ im überkritischen Zustand eine zu geringe Viskosität aufweist.

Die DE 102 18 519 C1 beschreibt ein Verfahren zur Reinigung von Gegenständen in einem Druckbehälter mittels eines komprimierten Gases, welches ein oder mehrere Male nacheinander komprimiert und dekomprimiert wird. Hierdurch lassen sich partikelförmige und andere Verunreinigungen aus Vertiefungen, Sacklöchern oder offenen Hohlräumen in Gegenständen entfernen.

Die US 2003/0175626 A1 beschreibt ein Verfahren und eine Vorrichtung zur Entfernung von Verschmutzungen auf einem Substrat. Hierbei wird das Substrat mit einer superkritischen Flüssigkeit, wie z.B. superkritischem CO₂ besprüht. Die Verunreinigungen werden dann in der superkritischen Flüssigkeit gelöst und nach dem Reinigungsprozess aus der superkritischen Flüssigkeit entfernt, indem die superkritische Flüssigkeit in ihrem flüssigen Zustand gekühlt wird.

Die US 2004/0112406 A1 beschreibt ein Verfahren und eine Vorrichtung zur Entfernung fester und flüssiger Rückstände von elektronischen Komponenten, wie z.B. Halbleiterwafern, wobei ebenfalls flüssiges oder überkritisches Kohlendioxid eingesetzt wird.

Die DE 103 18 238 A1 beschreibt eine Vorrichtung zur Reinigung der Innenflächen von Gewindebohrungen, wobei ein Blaseinsatz mit einem Längsschnitt in das Gewinde eingeführt wird und anschließend ein Reinigungsmedium unter Druck in den Blaseinsatz eingeleitet wird. Das Reinigungsmedium tritt dann mit Drall aus der Längsöffnung aus und entfernt im Gewinde anhaftende Verunreinigungen oder Partikel.

Aus der US 5,482,211 ist ein Verfahren zur Reinigung von Oberflächen von Werkstücken mittels überkritischem CO₂ bekannt.

Der nächstliegende Stand der Technick, DE 44 23 188 A1, beschreibt ein Verfahren und eine Vorrichtung zur Reinigung von Druckgasflaschen mit überkritischem CO₂.

Es ist daher Aufgabe der vorliegenden Erfindung, ein Verfahren und eine Vorrichtung zur Verfügung zu stellen, mit dem aus Kavitäten Verunreinigungen, wie Partikeln oder Fetten/Ölen, entfernt werden können.

Diese Aufgabe wird durch das Verfahren nach Anspruch 1 und die Vorrichtung nach Anspruch 8 gelöst. Vorteilhafte Weiterbildungen des erfindungsgemäßen Verfahrens und der erfindungsgemäßen Vorrichtung werden in den jeweiligen abhängigen Ansprüchen gegeben.

Erfindungsgemäß wird bei dem Verfahren zur Reinigung von Kavitäten in Werkstücken mehrstufig vorgegangen. Zuerst wird in die Kavität überkritisches Kohlendioxid eingeleitet und mit diesem überkritischen Kohlendioxid die Kavität gespült. Durch diesen Schritt erfolgt insbesondere eine Entfettung der Kavität. Das Einleiten des überkritischen Kohlendioxids erfolgt über eine Lanze. Entscheidend ist hierbei, dass zwischen dem Element zur Einleitung des überkritischen Kohlendioxids in die Kavität (der Reinigungsvorrichtung) und dem Werkstück rund um die Öffnung der Kavität eine sehr gute Abdichtung erfolgen muss, da CO₂ erst bei einem Druck > 73,8 bar (kritischer Druck) bei zugleich einer Temperatur > 31 °C (kritische Temperatur), überkritisch wird.

Im Anschluss an die Spülung wird nun das überkritische CO₂ in der Kavität entspannt. Dies kann beispielsweise durch Öffnung eines Ventils bzw. Öffnen der Abdichtung erfolgen. Durch diese Entspannung bildet sich in der Kavität aus dem überkritischen CO₂ Kohlendioxidschnee, der aufgrund der Gasexpansion aus der Kavität ausgetrieben wird. Durch den Kohlendioxidschnee werden auch Partikel auf der Innenoberfläche der Kavität abgelöst, die zusammen mit dem CO₂-Schnee ausgeblasen werden.

Bei dem erfindungsgemäßen Verfahren handelt es sich also um eine spezielle Form der Spülung mit überkritischem CO₂ in Kombination mit einer anschließenden Erzeugung von CO₂-Schnee aus dem eingeleiteten flüssigen oder überkritischen CO₂.

Entscheidend bei dem vorliegenden Verfahren ist also, dass es die im Stand der Technik bekannten Nachteile einer Badlösung in überkritischem CO₂ vermeidet. Vielmehr werden hier die Vorteile der Lösungsmitteleigenschaften von überkritischem CO₂ mit den Ablöseeigenschaften bezüglich Partikeln von CO₂-Schnee miteinander verbunden.

Durch dieses Verfahren können auch Kavitäten mit einem Durchmesser < 1 mm sowohl entfettet als auch von Partikeln gereinigt werden. Es ist möglich, Kavitäten mit nahezu beliebig hohen Aspektverhältnissen zu reinigen, ohne dass anschließend eine Nacharbeitung, wie beispielsweise eine Trocknung, erforderlich ist. Denn das in der Kavität enthaltene CO₂ sublimiert abschließend vollständig. Da auch weder ein wässriges noch ein organisches Lösungsmittel in die Kavität eingebracht wurde, erfolgt anschließend auch keine Korrosion in der Kavität.

Das Lösungs- und Strahlmittel CO₂ selbst ist nicht toxisch, nicht brennbar, jedoch sehr leicht zu geringen Kosten verfügbar. Schutzmaßnahmen, wie beispielsweise Emissionsschutz oder Explosionsschutz sind daher nicht erforderlich. Es werden keine Abfälle erzeugt, sodass auch keine Entsorgung des Lösungsmittels erforderlich ist.

Es ist weiterhin möglich, die ausgetragenen Verschmutzungen (Öle, Fette und Partikel) vom CO₂ zu trennen. Das gesamte Verfahren ermöglicht damit auch die Wiedergewinnung des CO₂ (erhöhte Kosteneinsparungen und Umweltfreundlichkeit). Dies ist vor allem für die automatisierte Anwendung von Interesse.

Vorteilhafterweise erfolgt das Ausblasen des Kohlendioxidschnees mit weiterem zugeleitetem Kohlendioxid bzw. mit einem anderen Gas, wie beispielsweise Stickstoff oder Druckluft. Wird weiteres Kohlendioxid, insbesondere flüssiges Kohlendioxid, in die Kavität eingeleitet, so kann zugleich auch weiterer CO₂-Schnee erzeugt werden.

Um in dem Werkstück das CO₂ im ersten Schritt im überkritischen Zustand zu halten, kann das Werkstück auch beheizt werden, beispielsweise durch einen Ofen, eine Heizplatte, ein Warmluftgebläse oder auch einen Infrarotstrahler.

Vorteilhafterweise wird für das erfindungsgemäße Verfahren eine Reinigungsvorrichtung verwendet, die einen Auslass für CO₂ aufweist, der seinerseits am Werkstück sehr gut abgedichtet werden kann. Hierdurch ist es möglich, aus der Reinigungsvorrichtung überkritisches CO₂ unter hohem Druck in die Kavität des Werkstücks einzuleiten. Die Reinigungsvorrichtung weist eine Lanze auf, die an ihrem Ende mindestens ein derartiges Auslasselement für das Reinigungsmedium CO₂ aufweist. Die Auslasselemente können auch seitlich am Umfang der Lanze angeordnet sein, um beispielsweise beim Herausziehen der Lanze in der Kavität angeordnete Gewinde vollständig zu reinigen.

Auch die Medienversorgungsvorrichtung gemäß der vorliegenden Erfindung ist speziell ausgebildet, indem sie nämlich nicht nur eine Zufuhr für überkritisches CO₂ zu der Reinigungsvorrichtung und in die Kavität aufweist. Vielmehr wird zwar das überkritische CO₂ wie im Stand der Technik durch Komprimieren und Aufheizen von aus einem Behälter entnommenem CO₂ hergestellt. Dieser Bereich kann erfindungsgemäß über eine Bypassleitung umgangen werden, sodass die Reinigungsvorrichtung statt mit überkritischem CO₂ alternativ auch mit flüssigem oder gasförmigem CO₂ versorgt werden kann. Hierdurch ist ein Ausblasen des aus überkritischem CO₂ entstandenen CO₂-Schnees aus der Kavität im Anschluss an das Spülen mit dem überkritischen CO₂ möglich.

Vorteilhafterweise ist es auch möglich zur Abreinigung stärkerer Verunreinigungen den Reinigungsprozess, wie oben beschrieben, zyklisch zu wiederholen.

Im Folgenden werden nun Beispiele des erfindungsgemäßen Verfahren der erfindungsgemäßen Reinigungsvorrichtung sowie der erfindungsgemäßen Medienversorgung beschrieben.

### Es zeigen

Figur 1 drei Stufen eines erfindungsgemäßen Reinigungsverfahrens sowie ein Reinigungswerkzeug;
Figur 2 ein erfindungsgemäßes Verfahren zur Reinigung von Kavitäten mit mehreren Öffnungen; und
Figur 3 das Schema eines erfindungsgemäßen Medienversorgungssystems.

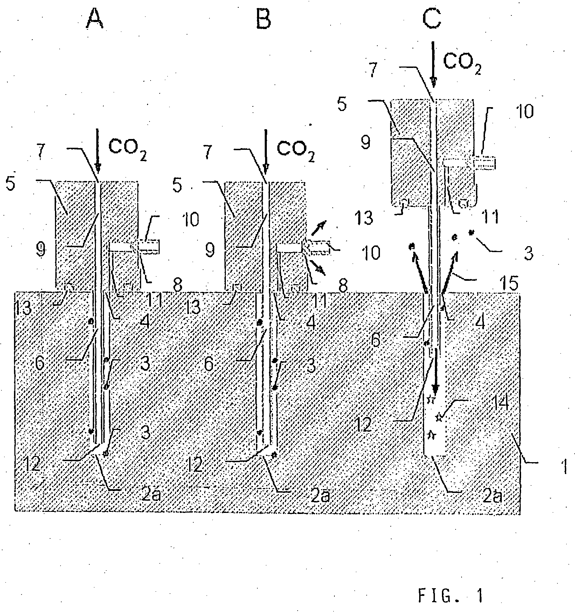

Figur 1 zeigt in den Teilbildern A, B und C drei Schritte der Reinigung einer Kavität 2a (Bohrung) in einem Werkstück 1. In Figur 1A sind in der Kavität 2a Verunreinigungen 3 partikulärer Art dargestellt. Die Kavität weist eine Öffnung 4 an der Oberfläche des Werkstücks 1 auf. Auf diese Öffnung 4 ist nun eine Reinigungsvorrichtung 5 aufgesetzt und mittels einer umlaufenden Dichtung 13 an dem Werkstück 1 abgedichtet. Die Reinigungsvorrichtung 5 weist eine Lanze 6 auf, die an ihrem Lanzenende eine Öffnung 12 aufweist. Über eine Öffnung 7 kann nun über die Leitung 9 überkritisches CO₂ zu der Öffnung 12 geleitet und von dort in die Kavität 2a eingebracht werden. Weiterhin weist die Reinigungsvorrichtung 5 eine Bohrung 11 auf, die über ein Ventil 10 mit einem Auslass 8 verbunden ist. In der Reinigungsphase, die in Figur 1A dargestellt ist, ist das Ventil 10 geschlossen, sodass die Kavität 2a mit überkritischem CO₂-Fluid geflutet wird.

In der Figur 1B ist nun der Spülvorgang mit überkritischem CO₂ dargestellt, da das Ventil 10 geöffnet wird, sodass unter immer noch ausreichend hohem Druck die Kavität 2a mit überkritischem CO₂ gespült wird. Das überkritische CO₂ läuft dabei durch die Leitung 9 in die Kavität 2a und entfernt dort Fette und Öle. Partikuläre Ablagerungen kann das überkritische CO₂ wegen seiner geringen Viskosität nur unzureichend aus der Kavität entfernen. Anschließend fließt das überkritische CO₂ über die Bohrung 11 und das Ventil 10 zum Auslass 8. Dort kann es beispielsweise wieder aufgefangen werden.

Im weiteren Schritt gemäß dem vorliegenden Verfahren, der in Figur 1C dargestellt ist, wird die Reinigungsvorrichtung 5 von der Bohrung 2a abgezogen. Hierdurch wird das überkritische CO₂ entspannt, sodass CO₂-Schnee entsteht, der beim Ausströmen aus der Kavität 2a als CO₂-Strahl 15 die partikulären Verunreinigungen 3 mit sich reißt und aus der Kavität 2a austrägt.

In Figur 1C ist weiterhin dargestellt, dass nunmehr über die Lanze 6 beispielsweise überkritisches flüssiges oder auch gasförmiges CO₂ in die Kavität eingetragen und dort zu CO₂-Schnee umgewandelt wird. Hierdurch wird das zuvor überkritische CO₂ aus der Kavität 2a ausgeblasen und zugleich die Kavität weiter mit CO₂-Schnee 14 bestrahlt. Während der Entnahme der Reinigungsvorrichtung 5 aus der Kavität 2a kann durch kontinuierliches Einleiten von CO₂ bzw. CO₂-Strahlen die innere Mantelfläche der Kavität weiter gereinigt werden.

Sind hierzu seitlich auf dem Umfang der Lanze 6 CO₂-Düsen angeordnet, so kann ein echtes CO₂-Strahlen bewirkt werden.

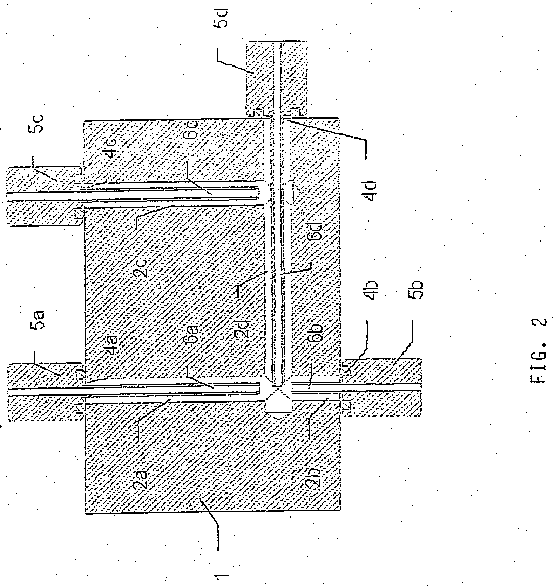

Figur 2 zeigt ein Beispiel für den Einsatz von insgesamt vier Reinigungsvorrichtungen 5a, 5b, 5c und 5d mit jeweiligen Lanzen 6a, 6b, 6c und 6d auf den Öffnungen 4a, 4b, 4c und 4d der miteinander kommunizierenden Kavitäten 2a, 2b, 2c, 2d an der Oberfläche des Werkstücks 1. Hier wie im Folgenden werden gleiche und ähnliche Elemente wie in Figur 1 gleiche oder ähnliche Bezugszeichen verwendet.

Mit dem erfindungsgemäßen Verfahren ist also auch eine gleichzeitige Reinigung mehrerer, gegebenenfalls miteinander verbundener Kavitäten, beispielsweise eines Kanalsystems eines Ventilsblocks, möglich. Die Reinigung der Kavitäten kann dabei gleichzeitig oder aufeinander abgestimmt erfolgen. Auch die Verwendung jeweils angepasster Reinigungswerkzeuge, die gleichzeitig oder auch nacheinander für jede einzelne Bohrung angesteuert werden können, ist möglich. Insbesondere kann auch ohne weiteres eine der Reinigungsvorrichtungen 5a, 5b, 5c oder 5d bzw. mehrere dieser Reinigungsvorrichtungen durch Blindstopfen ersetzt werden. Relevant ist lediglich, dass das Kavitätensystem unter Druck gehalten werden kann, der ein Spülen mit überkritischem CO₂ ermöglicht.

Das nach der Reinigung mit Fetten oder Partikeln belastete CO₂ kann anschließend einfach durch Filtration oder Ausfällung gereinigt und im Kreislauf der Reinigungsanlage wieder zugeführt werden. Bei der Filtration werden die im Reinigungsmedium befindlichen partikulären Verunreinigungen aus dem flüssigen und/oder aus dem gasförmigen Zustand mittels Filter abgeschieden. Eine alternative zur Filtration stellt beispielsweise die Ausfällung dar. Hierbei wird das Reinigungsmedium auf einen Druck entspannt, bis es gasförmig vorliegt. Auch hierdurch erfolgt eine Trennung der partikulären bzw. der gelösten Stoffe vom in den gasförmigen Zustand überführten Reinigungsmedium.

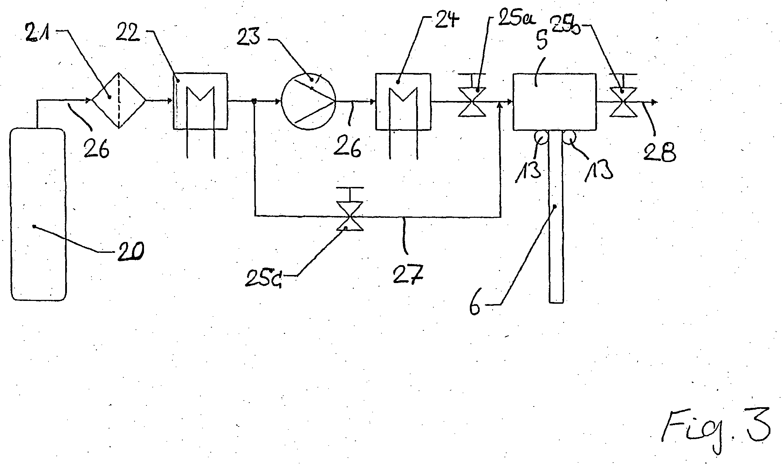

Figur 3 zeigt ein Medienversorgungssystem für eine Reinigungsvorrichtung 5. Die Reinigungsvorrichtung 5 ist in Figur 3 ebenfalls dargestellt mit einer Lanze 6 und einer ringförmigen Dichtung 13. Das Medienversorgungssystem aus Figur 3 kann auch selbst als Teil der Reinigungsvorrichtung betrachtet werden.

Bei der erfindungsgemäßen Vorrichtung sind über ein Leitung 26 nacheinander ein Vorratsbehälter 20 für CO₂ (Gasgebinde), ein Filter 21 zur Reinigung des CO₂, eine Kühleinheit 22 zur Kühlung des CO₂, eine Hochdruckpumpe 23 zur Druckerhöhung des CO₂ auf einen überkritischen Druck, eine Heizvorrichtung 24 (Heizstrecke) zur Erhöhung der Temperatur des CO₂ auf eine überkritische Temperatur, ein Absperr- bzw. Volumenstromregelventil 25a, die Reinigungsvorrichtung 5 und ein weiteres Absperr- bzw. Volumenstromregelungsventil 25b angeordnet. Über diese Leitungsstrecke ist es also möglich, in die Lanze 6 überkritisches CO₂ einzuleiten.

Erfindungsgemäß ist nun eine Bypassleitung um die Hochdruckpumpe 23, die Heizstrecke 24 und das Ventil 25a angeordnet. Diese Bypassleitung 27 weist ihrerseits ein Absperr- bzw. Volumenstromregelungsventil 25c auf.

Wird nun das Ventil 25a und zugleich das Ventil 25b geöffnet, so strömt überkritisches CO₂ durch die Lanze und durch die hier nicht dargestellte Kavität zurück zum Ventil 25b (entspricht dem Ventil 10 in Figur 1) zum Spülen der Kavität.

Erfindungsgemäß weist die Medienversorgungseinrichtung eine Bypassleitung 27 auf, die die Hochdruckpumpe 23 und die Heizstrecke 24 sowie das Ventil 25a umgeht. Sie ist mit einem Ventil 25c zur Absperrung bzw. zur Volumenstromregelung versehen. Über diese Leitung 27 lässt sich nun bei geöffnetem Ventil 25c (und zugleich geschlossenem Ventil 25a) gasförmiges CO₂ oder über die Kühlvorrichtung 22 in den flüssigen Zustand versetztes CO₂ in die Reinigungsvorrichtung 5 und die Lanze 6 einbringen. Wurde zuvor die Reinigungsvorrichtung 5 mit ihren Dichtungen vom Werkstück soweit abgehoben, dass kein überkritischer Druck in der Kavität, die hier nicht dargestellt ist, mehr herrscht, so kann nun mit dem gasförmigen oder flüssigen CO₂ das überkritische CO₂ bzw. der daraus entstandene CO₂-Schnee aus der Kavität ausgeblasen werden. Durch weiteres Einleiten von flüssigem CO₂ kann ein weiteres Reinigen und insbesondere Strahlen der Kavität mit CO₂-Schnee erfolgen.

## Patentansprüche

1. Verfahren zur Reinigung von Kavitäten (2a) in Werkstücken (1), wobei in einer ersten Stufe mittels einer Reinigungsvorrichtung (5) über eine in eine Kavität (2a) eingebrachten Lanze (6) der Reinigungsvorrichtung (5) überkritisches Kohlendioxid in die Kavität eingeleitet und mit dem überkritischen Kohlendioxid die Kavität gespült wird, und nach dem Spülen der Kavität in einer weiteren Stufe das in der Kavität befindliche überkritische Kohlendioxid derart entspannt wird, dass sich in der Kavität Kohlendioxidgas und - schnee bildet und (2) durch den Kohlendioxidschnee Partikel auf der Innenoberfläche der Kavität abgelöst werden, die zusammen mit dem Kohlendioxidschnee aufgrund der Gasexpansion anschließend aus der Kavität ausgetrieben werden,
wobei zumindest während der ersten Stufe eine umlaufende Abdichtung zwischen der Reinigungsvorrichtung (5) der Öffnung (4) der Kavität (2a) erfolgt.

2. Verfahren nach dem vorhergehenden Anspruch, **dadurch gekennzeichnet, dass** zum Ausblasen des Kohlendioxidschnees ein weiteres Fluid in die Kavität eingeleitet wird.

3. Verfahren nach dem vorhergehenden Anspruch, **dadurch gekennzeichnet, dass** als das zum Ausblasen des Kohlendioxidschnees verwendete weitere Fluid ein Gas, gasförmiges, flüssiges oder überkritisches Kohlendioxid, molekularer Stickstoff oder Druckluft verwendet wird.

4. Verfahren nach einem der beiden vorhergehenden Ansprüche, **dadurch gekennzeichnet, dass** als weiteres Fluid gasförmiges, flüssiges oder überkritisches Kohlendioxid derart eingeleitet wird, dass sich in der Kavität weiterer Kohlendioxidschnee bildet.

5. Verfahren nach einem der vorhergehenden Ansprüche, **dadurch gekennzeichnet, dass** das zu reinigende Werkstück beheizt wird.

6. Verfahren nach dem vorhergehenden Anspruch, **dadurch gekennzeichnet, dass** das zu reinigende Werkstück mit einem Ofen, einer Heizplatte, einem Warmluftgebläse oder einem IR-Strahler beheizt wird.

7. Verfahren nach einem der vorhergehenden Ansprüche, **dadurch gekennzeichnet, dass** die einzelnen Schritte des Verfahrens in der angegebenen Abfolge mindestens einmal, zweimal oder mehrmals durchgeführt werden.

8. Vorrichtung mit
einer Vorrichtung zur Medienversorgung einer Reinigungsvorrichtung (5) mit fluidem Kohlendioxid als Reinigungsmedium,
wobei die Vorrichtung zur Medienversorgung einer Reinigungsvorrichtung (5) mit fluidem Kohlendioxid als Reinigungsmedium, einen Vorratsbehälter (20) für Kohlendioxid, einen mit einer Reinigungsvorrichtung verbindbaren Fluidauslass, der mit dem Vorratsbehälter über eine Fluidleitung (26) verbunden ist, eine in der Fluidleitung nach dem Vorratsbehälter angeordnete Kühleinheit (22), eine in der Fluidleitung angeordnete Hochdruckpumpe (23) zur Erzeugung eines hohen Arbeitsdrucks des Reinigungsmediums in der Fluidleitung, eine in der Fluidleitung nach der Kühleinheit angeordneten Heizvorrichtung (24) sowie ein in der Fluidleitung angeordnetes erstes steuerbares Ventil (25a) und eine Fluid-Bypassleitung (27) um die Pumpe oder die Heizvorrichtung oder um die Pumpe und die Heizvorrichtung, die ein zweites steuerbares Ventil (25c) aufweist, aufweist und mit
einer Reinigungsvorrichtung (5) zur Reinigung einer Kavität in Werkstücken mit einem Einlass und einem Auslass für ein Reinigungsmedium, wobei der Einlass mit der Vorrichtung zur Medienversorgung verbunden ist, und die Reinigungsvorrichtung eine Lanze (6) aufweist, mit mindestens einem Auslasselement, das geeignet ist, um überkritisches, flüssiges oder gasförmiges CO₂ in die zu reinigende Kavität einzutragen und dort zu CO₂-Schnee als CO₂-Strahl umzuwandeln und, dass die Reinigungsvorrichtung ferner eine die Lanze (6) umgebende ringförmige Dichtung (13) aufweist.

9. Vorrichtung nach dem vorhergehenden Anspruch,
**dadurch gekennzeichnet, dass** die Bypassleitung mit ihrem einen Ende an einem ersten Verbindungspunkt vor der Pumpe (23) oder der Heizvorrichtung (24) mit der Fluidleitung (26) und mit ihrem anderen Ende an einem zweiten Verbindungspunkt hinter der Pumpe oder der Heizvorrichtung mit der Fluidleitung verbunden ist.

10. Vorrichtung nach dem vorhergehenden Anspruch,
dadurch gekenntzeichnet, dass
das erste Ventil (5a) in der Fluidleitung (26) zwischen dem ersten und dem zweiten Verbindungspunkt angeordnet ist.

11. Reinigungsvorrichtung nach einem der Ansprüche 8 bis 10, **gekennzeichnet durch** eine Dichtung (13) zur Abdichtung zwischen dem Auslass und dem zu reinigenden Werkstück.

12. Reinigungsvorrichtung nach einem der Ansprüche 8 bis 11, **dadurch gekennzeichnet, dass** der Auslass mindestens ein Auslasselement für das Reinigungsmedium aufweist.

13. Reinigungsvorrichtung nach dem vorhergehenden Anspruch, **dadurch gekennzeichnet, dass** die Lanze (6) Auslasselemente im Bereich ihres Endes in axialer Richtung oder seitlich auf ihrer sich längs ihrer Achse erstreckenden Oberfläche oder im Bereich ihres Endes in axialer Richtung und seitlich auf ihrer sich längs ihrer Achse erstreckenden Oberfläche aufweist.

## Claims

1. Method for cleaning cavities (2a) in workpieces (1), wherein, in a first stage, supercritical carbon dioxide is introduced into the cavity by means of a cleaning device (5) via a lance (6) of the cleaning device (5) that is introduced into a cavity (2a) and the cavity is rinsed with the supercritical carbon dioxide, and, in a further stage, after the rinsing of the cavity, the supercritical carbon dioxide located in the cavity is relaxed in such a way that carbon dioxide gas and carbon dioxide snow are formed in the cavity and particles on the inner surface of the cavity are removed by the carbon dioxide snow, said particles then being driven out of the cavity, together with the carbon dioxide snow, due to gas expansion,
wherein, at least during the first stage, a circumferential sealing between the cleaning device (5) and the opening (4) of the cavity (2a) takes place.

2. Method according to the preceding claim, **characterised in that** a further fluid is introduced into the cavity in order to remove the carbon dioxide snow.

3. Method according to the preceding claim, **characterised in that** a gas, gaseous, liquid or supercritical carbon dioxide, molecular nitrogen or compressed air is used as the further fluid for removing the carbon dioxide snow.

4. Method according to one of the two preceding claims, **characterised in that** gaseous, liquid or supercritical carbon dioxide is introduced as the further fluid in such a way that more carbon dioxide snow forms in the cavity.

5. Method according to one of the preceding claims, **characterised in that** the workpiece to be cleaned is heated.

6. Method according to the preceding claim, **characterised in that** the workpiece to be cleaned is heated with an oven, a heating plate, a hot air blower or an IR emitter.

7. Method according to one of the preceding claims, **characterised in that** the individual steps of the method are carried out in the specified sequence at least once, twice or multiple times.

8. Device having a device for media supply of a cleaning device (5) with fluid carbon dioxide as the cleaning medium,
wherein the device for media supply of a cleaning device (5) with fluid carbon dioxide as the cleaning medium has a storage tank (20) for carbon dioxide, a fluid outlet that is able to be connected to a cleaning device, said fluid outlet being connected to the storage tank via a fluid line (26), a cooling unit (22) arranged in the fluid line after the storage tank, a highpressure pump (23) arranged in the fluid line for the generation of a high working pressure of the cleaning medium in the fluid line, a heating device (24) arranged in the fluid line after the cooling unit, as well as a first controllable valve (25a) arranged in the fluid line and a fluid bypass line (27) around the pump or the heating device or around the pump and the heating device, said bypass line having a second controllable valve (25c), and having
a cleaning device (5) for cleaning a cavity in workpieces, having an inlet and an outlet for a cleaning medium, wherein the inlet is connected to the device for media supply and the cleaning device has a lance (6) having at least one outlet element which is suitable for introducing supercritical, liquid or gaseous CO₂ into the cavity to be cleaned and converting it there into CO₂ snow as a CO₂ beam, and the cleaning device furthermore has an annular seal (13) enclosing the lance (6).

9. Device according to the preceding claim, **characterised in that** the bypass line is connected to the fluid line (26) at a first connection point before the pump (23) or the heating device (24) with one of its ends and is connected to the fluid line at a second connection point behind the pump or the heating device with its other end.

10. Device according to the preceding claim, **characterised in that** the first valve (5a) is arranged in the fluid line (26) between the first and the second connection point.

11. Cleaning device according to one of claims 8 to 10, **characterised by** a seal (13) for sealing between the outlet and the workpiece to be cleaned.

12. Cleaning device according to one of claims 8 to 11, **characterised in that** the outlet has at least one outlet element for the cleaning medium.

13. Cleaning device according to the preceding claim, **characterised in that** the lance (6) has outlet elements in the region of its end in the axial direction or laterally on its surface extending along its axis or in the region of its end in the axial direction and laterally on its surface extending along its axis.

## Revendications

1. Procédé pour le nettoyage de cavités (2a) dans des pièces (1), moyennant quoi, dans une première étape, à l'aide d'un dispositif de nettoyage (5), par l'intermédiaire d'une lance (6) du dispositif de nettoyage (5), inséré dans une cavité (2a), du dioxyde de carbone supercritique est introduit dans la cavité et la cavité est rincée avec le dioxyde de carbone supercritique et, après le rinçage de la cavité, dans une étape supplémentaire, le dioxyde de carbone supercritique se trouvant dans la cavité étant détendu de façon à ce que du dioxyde de carbone gazeux et de la neige de dioxyde de carbone se forment dans la cavité et la neige de dioxyde de carbone permettant de détacher des particules sur la surface interne de la cavité, qui sont ensuite expulsées hors de la cavité en même temps que la neige de dioxyde de carbone du fait de la dilatation du gaz, une étanchéification circulaire entre le dispositif de nettoyage (5) et l'ouverture (4) de la cavité (2a) étant assurée au moins pendant la première étape.

2. Procédé selon la revendication précédente, **caractérisé en ce que**, pour le soufflage de la neige de dioxyde de carbone, un fluide supplémentaire est introduit dans la cavité.

3. Procédé selon la revendication précédente, **caractérisé en ce que** le fluide supplémentaire utilisé pour le soufflage de la neige de dioxyde de carbone est un gaz, du dioxyde de carbone gazeux, liquide ou supercritique, de l'azote moléculaire ou de l'air comprimé.

4. Procédé selon l'une des deux revendications précédentes, **caractérisé en ce que**, en tant que fluide supplémentaire, du dioxyde de carbone gazeux, liquide ou supercritique est introduit de façon à ce que de la neige de dioxyde de carbone supplémentaire se forme dans la cavité.

5. Procédé selon l'une des revendications précédentes, **caractérisé en ce que** la pièce à nettoyer est chauffée.

6. Procédé selon la revendication précédente, **caractérisé en ce que** la pièce à nettoyer est chauffée avec un four, une plaque chauffante, une soufflante à air chaud ou un émetteur de rayonnement infrarouge.

7. Procédé selon l'une des revendications précédentes, **caractérisé en ce que** les différentes étapes du procédé sont effectuées une fois, deux fois ou plus dans l'ordre indiqué.

8. Dispositif avec
un dispositif pour l'alimentation en fluide d'un dispositif de nettoyage (5) avec du dioxyde de carbone fluide en tant que fluide de nettoyage,
le dispositif d'alimentation en fluide d'un dispositif de nettoyage (5) avec du dioxyde de carbone fluide en tant que fluide de nettoyage, comprend un réservoir (20) pour du dioxyde de carbone, une sortie de fluide pouvant être reliée à un dispositif de nettoyage, qui est relié au réservoir par l'intermédiaire d'une conduite de fluide (26), une unité de refroidissement (22) disposée dans la conduite de fluide après le réservoir, une pompe à haute pression (23) disposée dans la conduite de fluide pour la génération d'une pression de service élevée, un dispositif de chauffage (24) disposé dans la conduite de fluide après l'unité de refroidissement ainsi qu'une première soupape contrôlable (25a) disposée dans la conduite de fluide et une conduite de dérivation de fluide (27) autour de la pompe ou du dispositif de chauffage ou autour de la pompe et du dispositif de chauffage, qui comprend une deuxième soupape contrôlable (25c) et avec un dispositif de nettoyage (5) pour le nettoyage d'une cavité dans des pièces avec une admission et une évacuation pour un fluide de nettoyage, l'admission étant reliée avec le dispositif d'alimentation de fluide et le dispositif de nettoyage comprenant une lance (6), avec au moins un élément d'évacuation conçu de manière à introduire du CO2 supercritique, liquide ou gazeux dans la cavité à nettoyer et à le transformer en neige de CO2 en tant que jet de CO2 et en ce que le dispositif de nettoyage comprend en outre un joint d'étanchéité (13) entourant la lance (6).

9. Dispositif selon la revendication précédente, **caractérisé en ce que** la conduite de dérivation est reliée, au niveau d'une des ses extrémités, à un premier point de liaison avant la pompe (23) ou le dispositif de chauffage (24), avec la conduite de fluide (26) et, avec leur autre extrémité, à un deuxième point de liaison derrière la pompe ou le dispositif de chauffage, avec la conduite de fluide.

10. Dispositif selon la revendication précédente, **caractérisé en ce que** la première soupape (5a), est disposée dans la conduite de fluide (26) entre le premier et le deuxième point de liaison.

11. Dispositif de nettoyage selon l'une des revendications 8 à 10, **caractérisé par** un joint d'étanchéité (13) pour l'étanchéification entre l'évacuation et la pièce à nettoyer.

12. Dispositif de nettoyage selon l'une des revendications 8 à 11, **caractérisé en ce que** l'évacuation comprend au moins un élément d'évacuation pour le fluide de nettoyage.

13. Dispositif de nettoyage selon la revendication précédente, **caractérisé en ce que** la lance (6) comprend des éléments d'évacuation au niveau de son extrémité dans la direction axiale ou latéralement sur sa surface s'étendant le long de son axe ou au niveau de son extrémité dans la direction axiale et latéralement sur sa surface s'étendant le long de son axe.
